(19) Europäisches Patentamt
European Patent Office
Office européen des brevets

(11) **EP 4 095 166 A1**

(12) **EUROPEAN PATENT APPLICATION**
published in accordance with Art. 153(4) EPC


(43) Date of publication:
**30.11.2022 Bulletin 2022/48**

(21) Application number: **21743667.4**

(22) Date of filing: **18.01.2021**

(51) International Patent Classification (IPC):
***C08F 36/04** (2006.01)* ***C08F 8/40** (2006.01)*
***C08F 8/32** (2006.01)* ***C08L 9/00** (2006.01)*
***C08L 19/00** (2006.01)* ***C08K 3/04** (2006.01)*
***C08K 3/36** (2006.01)*

(52) Cooperative Patent Classification (CPC):
**C08F 8/32; C08F 8/40; C08F 36/04; C08K 3/04; C08K 3/36; C08L 9/00; C08L 19/00;** Y02T 10/86

(86) International application number:
**PCT/KR2021/000643**

(87) International publication number:
**WO 2021/149982 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.01.2020 KR 20200007494**



(71) Applicant: **LG Chem, Ltd.**
**Seoul 07336 (KR)**

(72) Inventors:
- **LEE, Ro Mi**
  **Daejeon 34122 (KR)**
- **KIM, No Ma**
  **Daejeon 34122 (KR)**
- **NA, Youk Reol**
  **Daejeon 34122 (KR)**
- **MUN, Min Sik**
  **Daejeon 34122 (KR)**
- **LEE, Ho Young**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**


(54) **MODIFIED CONJUGATED DIENE-BASED POLYMER, METHOD FOR PREPARING SAME, AND RUBBER COMPOSITION COMPRISING SAME**


(57) The present invention relates to a modified conjugated diene-based polymer and a rubber composition including the same, and provides a modified conjugated diene-based polymer satisfying the following: a) a molecular weight distribution curve by gel permeation chromatography (GPC) has a unimodal shape; b) molecular weight distribution (PDI: MWD) is 1.00 or more and less than 1.70; c) cold flow is 1.00 or less; and d) the Si content is 100 ppm or more based on a total weight of the modified conjugated diene-based polymer.


FIG. 1

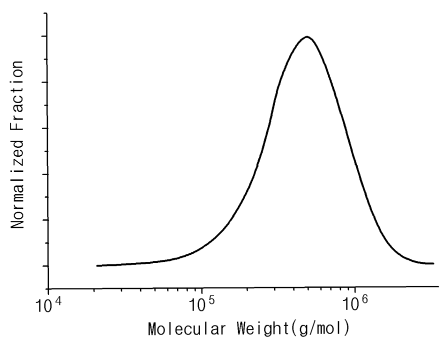


EP 4 095 166 A1

## Description

## TECHNICAL FIELD

### [Cross-reference to Related Applications]

The present application claims the benefit of priority based on Korean Patent Application No. 10-2020-0007494, filed on January 20, 2020, the entire contents of which are incorporated herein by reference.

### [Technical Field]

The present invention relates to a modified conjugated diene-based polymer, a method for preparing the same, and a rubber composition including the same.

## BACKGROUND ART

Recently, according to the growing attention on energy saving and environmental issues, the decrease of the fuel consumption ratio of cars is required, and accordingly, materials having modulational stability represented by wet skid resistance as well as low running resistance and excellent abrasion resistance and tensile properties are required as rubber materials for tires.

In order to reduce the running resistance of tires, there is a method of reducing hysteresis loss of vulcanized rubber, and rebound resilience at 50°C to 80°C, tan $\delta$, Goodrich heating, or the like is used as an evaluation index of the vulcanized rubber. That is, it is desirable to use a rubber material having high rebound resilience at the above temperature or a low tan $\delta$ value or Goodrich heating.

As a method for accomplishing the requirement, a method for decreasing the heating properties of tires using an inorganic filler such as silica and carbon black in a rubber composition for forming tires has been suggested. However, the dispersion of the inorganic filler in the rubber composition is not favorable, and defects of degrading overall physical properties of the rubber composition including abrasion resistance, crack resistance or processability arise.

In order to solve such problems, a method for modifying the polymerization active part of a conjugated diene-based polymer which is obtained by anionic polymerization using an organolithium with a modifier containing a functional group which is capable of interacting with an inorganic filler, has been suggested as a method for increasing the dispersibility of an inorganic filler such as silica and carbon black in a rubber composition. However, even the low heating properties are improved, tensile properties, abrasion resistance and processability are still deteriorated.

## DISCLOSURE OF THE INVENTION

## TECHNICAL PROBLEM

The present invention has been devised to solve the above-mentioned problems of the conventional technique, and an object is to provide a modified conjugated diene-based polymer which satisfies a high modification ratio and low glass transition temperature at the same time, has a unimodal shape molecular weight distribution curve by gel permeation chromatography, narrow molecular weight distribution of less than 1.70, high Si content of 100 ppm or more, and excellent cold flow properties, and a method for preparing the same.

Also, an object of the present invention is to provide a rubber composition including a modified conjugated diene-based polymer which has improved viscoelasticity properties at high temperatures and at low temperatures and abrasion resistance at the same time, particularly, maintains rolling resistance to an excellent level, improves cold flow, and has excellent storage stability and forming stability.

## TECHNICAL SOLUTION

To solve the above-described tasks, according to an embodiment of the present invention, the present invention provides a modified conjugated diene-based polymer satisfying the following: a) a molecular weight distribution curve by gel permeation chromatography (GPC) has a unimodal shape; b) molecular weight distribution (PDI; MWD) is 1.00 or more to less than 1.70; c) cold flow is 1.00 or less; and d) the Si content is 100 ppm or more based on a total weight of the modified conjugated diene-based polymer.

In addition, the present invention provides a method for preparing a modified conjugated diene-based polymer, including: polymerizing a conjugated diene-based monomer in the presence of a polymerization initiator in a hydrocarbon solvent to prepare an active polymer (S1); and reacting the active polymer prepared in step (S1) with a modifier (S2),

wherein polymerization reaction (S1) and modification reaction (S2) are continuously performed, step (S1) is performed in two or more polymerization reactors, a polymerization conversion ratio in a first polymerization reactor among the polymerization reactors is 50% or less, the modifier includes a first modifier and a second modifier, the first modifier is a modifier having greater than five reactive functional groups which are capable of reacting with the active polymer, and the second modifier is a modifier having five or less reactive functional groups which are capable of reacting with the active polymer.

In addition, the present invention provides a rubber composition including the modified conjugated diene-based polymer and a filler.

## ADVANTAGEOUS EFFECTS

The modified conjugated diene-based polymer according to the present invention satisfies a high modification ratio and a low glass transition temperature at the same time, and may have a unimodal shape molecular weight distribution curve by gel permeation chromatography, narrow molecular weight distribution of less than 1.70, the high Si content of 100 ppm or more, and excellent cold flow properties.

Though being prepared by a continuous polymerization process, since the modified conjugated diene-based polymer according to the present invention has narrow molecular weight distribution and may have excellent viscoelasticity properties at high temperatures and low temperatures when compounding a rubber composition, and since a glass transition temperature is low, abrasion resistance may be improved to an excellent level. In addition, the modified conjugated diene-based polymer of the present invention has improved cold flow properties, and when compounding a rubber composition, storage stability and forming stability may be markedly improved, while maintaining rolling resistance to an excellent level.

In addition, the modified conjugated diene-based polymer according to the present invention includes a functional group derived from a modifier, and tensile properties and viscoelasticity properties may be improved even further.

## BRIEF DESCRIPTION OF THE DRAWING

The drawing attached to the present specification illustrates preferred example of the present invention, and serves to enable the further understanding of the technical concept of the present invention together with the detailed description, and therefore the present invention should not be interpreted only with matters in such a drawing.

FIG. 1 shows a molecular weight distribution curve by gel permeation chromatography (GPC) of a modified conjugated diene-based polymer of Example 1 according to an embodiment of the present invention.

## BEST MODE FOR CARRYING OUT THE INVENTION

Hereinafter, the present invention will be described in more detail in order to assist the understanding of the present invention.

It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

### Definition

The term "polymer" used in the present disclosure refers to a polymer compound prepared by polymerizing monomers irrespective of the same or different kinds of monomers. Likewise, the general term polymer includes a term homopolymer which is commonly used for referring to a polymer prepared by only one kind of monomer and a term copolymer which is commonly used for referring to a polymer prepared by two or more kinds of monomers.

The term "vinyl content" used in the present disclosure refers to, based on a conjugated diene monomer (butadiene, etc.) moiety (the total weight of polymerized butadiene) in the polymer, the mass (or weight) percent of butadiene included in 1 and 2 positions in a polymer chain.

In the present invention, the term "monovalent hydrocarbon group" may mean a monovalent atomic group obtained by bonding carbon and hydrogen in a monovalent alkyl group, alkenyl group, alkynyl group, cycloalkyl group, cycloalkyl group including one or more unsaturated bonds, and aryl group, and the minimum carbon number of a substituent represented by the monovalent hydrocarbon may be determined according to the kind of each substituent.

In the present invention, the term "divalent hydrocarbon group" may mean a divalent atomic group obtained by bonding carbon and hydrogen in a divalent alkylene group, alkenylene group, alkynylene group, cycloalkylene group, cycloalkylene group including one or more unsaturated bonds and arylene group, and the minimum carbon number of

a substituent represented by the divalent hydrocarbon may be determined according to the kind of each substituent.

In the present invention, the term "alkyl group" may mean a monovalent aliphatic saturated hydrocarbon and may include both a linear alkyl group such as methyl, ethyl, propyl and butyl, and a branched alkyl group such as isopropyl, sec-butyl, tert-butyl and neo-pentyl.

In the present invention, the term "alkenyl group" may mean a monovalent aliphatic unsaturated hydrocarbon including one or two or more double bonds.

In the present invention, the term "alkynyl group" may mean a monovalent aliphatic unsaturated hydrocarbon including one or two or more triple bonds.

In the present invention, the term "alkylene group" may mean a divalent aliphatic saturated hydrocarbon such as methylene, ethylene, propylene and butylene.

In the present invention, the term "aryl group" may mean cyclic aromatic hydrocarbon and may include both monocyclic aromatic hydrocarbon in which one ring is formed and polycyclic aromatic hydrocarbon in which two or more rings are combined.

In the present invention, the term "heterocyclic group" is obtained by substituting carbon atoms in a cycloalkyl group or an aryl group with one or more heteroatoms and may mean both a heterocycloalkyl group and a heteroaryl group.

The terms "comprising", and "having" and the derivatives thereof in the present invention, though these terms are particularly disclosed or not, do not intended to preclude the presence of optional additional components, steps, or processes. In order to avoid any uncertainty, all compositions claimed by using the term "comprising" may include optional additional additives, auxiliaries, or compounds, including a polymer or any other materials, unless otherwise described to the contrary. In contrast, the term "consisting essentially of ~" excludes unnecessary ones for operation and precludes optional other components, steps or processes from the scope of optional continuous description. The term "consisting of ~" precludes optional components, steps or processes, which are not particularly described or illustrated.

## Measurement methods and conditions

In the present disclosure, the "1,2-vinyl bond content" is obtained by measuring and analyzing the vinyl content in each polymer using Varian VNMRS 500 MHz NMR, using 1,1,2,2-tetrachloroethane as a solvent during measuring NMR, and calculating the 1,2-vinyl bond content in a total polymer by calculating 6.0 ppm as a solvent peak, 7.2-6.9 ppm as random styrene peaks, 6.9-6.2 ppm as block styrene peaks, 5.8-5.1 ppm as 1,4-vinyl and 1,2-vynyl peaks, and 5.1-4.5 ppm as 1,2-vinyl peaks.

In the present disclosure, "weight average molecular weight (Mw)", "number average molecular weight (Mn)", and "molecular weight distribution (MWD)" are measured through gel permeation chromatography (GPC) analysis and are measured by checking a molecular weight distribution curve. The molecular weight distribution (PDI, MWD, Mw/Mn) is calculated from each of the molecular weights measured. Particularly, the GPC uses two columns of PLgel Olexis (Polymer laboratories Co.) and one column of PLgel mixed-C (Polymer Laboratories Co.) in combination, and polystyrene (PS) is used as a GPC standard material for calculating the molecular weights, and tetrahydrofuran mixed with 2 wt% of an amine compound is used as a GPC measurement solvent. Conditions of a specimen concentration of 1-2 mg/mL (diluted in THF), a flow rate of 1 mL/min, an injection amount of 100 uL, and a column temperature of 40°C are applied, and a detector utilizes a refractive index.

In the present disclosure, the mooney viscosity (MV; (ML1+4, @100°C MU) is measured using MV-2000 (ALPHA Technologies Co.) using Large Rotor at a rotor speed of 2±0.02 rpm at 100°C. In this case, a specimen used is stood at room temperature (23±3°C) for 30 minutes or more, and 27±3 g of the specimen is collected and put in a die cavity, and then, Platen is operated for 4 minutes for measurement.

In the present disclosure, the glass transition temperature (Tg) is obtained as follows: a modified conjugated diene-based polymer is used as a specimen, and based on ISO 22768:2006, a differential scanning calorimeter (product name "DSC3200S" manufactured by MacScience Inc.) is used, helium is circulated in a rate of 50 ml/min, a DSC curve is recorded while elevating the temperature from -100°C in a rate of 10°C/min, and the peak top (inflection point) of the DSC differential curve is measured as the glass transition temperature.

In the present disclosure, for obtaining the cold flow, a modified conjugated diene-based polymer is used as a specimen, and in an oven of a temperature of 50°C, the temperature equilibrium of the specimen and the oven is achieved. After standing for 10 minutes, a polymer specimen pushed out is removed, and a stationary state is made. Then, the polymer specimen is extruded through an orifice with 1.4 inch with a pressure of 34.6 kPa, and an extruded amount of the polymer specimen flown out through the orifice is measured for 90 minutes with an interval of 30 minutes. The extruded amount is computed by gram per minute (mg/min) and shown as cold flow. The smaller the value is, the better the forming stability (storage stability) is.

In the present disclosure, the "Si content" is measured using an inductively coupled plasma optical emission spectroscopy (ICP-OES; Optima 7300DV) as an ICP analysis method. If the inductively coupled plasma optical emission

spectroscopy is used, measurement is performed by adding about 0.7 g of a specimen to a platinum (Pt) crucible, adding about 1 mL of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:

1) step 1: initial temp 0°C, rate (temp/hr) 180°C/hr, temp (holdtime) 180°C (1hr);
2) step 2: initial temp 180°C, rate (temp/hr) 85°C/hr, temp (holdtime) 370°C (2hr); and
3) step 3: initial temp 370°C, rate (temp/hr) 47°C/hr, temp (holdtime) 510°C (3hr),

adding 1 mL of concentrated nitric acid (48 wt%) and 20 μl of concentrated hydrofluoric acid (50 wt%) to a residue, sealing the platinum crucible and shaking for 30 minutes or more, adding 1 mL of boric acid to the specimen, storing at 0°C for 2 hours or more, diluting in 30 ml of ultrapure water, and performing incineration.

In the present disclosure, the "N content" may be obtained by measuring the N content, for example, through an NSX analysis method, and measurement by the NSX analysis method may use a quantitative analyzer of a trace amount of nitrogen (NSX-2100H). For example, in case of using the quantitative analyzer of a trace amount of nitrogen, the quantitative analyzer of a trace amount of nitrogen (Auto sampler, Horizontal furnace, PMT & Nitrogen detector) is turned on, carrier gas flow amounts are set to 250 ml/min for Ar, 350 ml/min for $O_2$, and 300 ml/min for ozonizer, a heater is set to 800°C, and the analyzer is stood for about 3 hours for stabilization. After stabilizing the analyzer, calibration curves of calibration curve ranges of 5 ppm, 10 ppm, 50 ppm, 100 ppm and 500 ppm are made using Nitrogen standard (AccuStandard S-22750-01-5 ml), and an area corresponding to each concentration is obtained. Then, by using the ratios of concentrations to areas, a straight line is made. After that, a ceramic boat holding 20 mg of a specimen is put in the auto sampler of the analyzer and measurement is conducted to obtain an area. By using the area of the specimen thus obtained and the calibration curve, the N content is calculated. In this case, the specimen is a modified conjugated diene-based polymer from which solvents are removed by putting the specimen in hot water heated by steam and stirring, and may be a specimen from which remaining monomers, remaining modifiers and oil are removed.

The present invention provides a modified conjugated diene-based polymer which has physical properties in specific ranges in combination, and is capable of improving the compounding properties of a rubber composition, if applied to a rubber composition, particularly, viscoelasticity properties and abrasion resistance, storage stability and forming stability at the same time.

According to an embodiment of the present invention, the present invention is characterized in providing a modified conjugated diene-based polymer satisfying the following: a) a molecular weight distribution curve by gel permeation chromatography (GPC) has a unimodal shape; b) molecular weight distribution (PDI; MWD) is 1.00 or more to less than 1.70; c) cold flow is 1.00 or less; and d) the Si content is 100 ppm or more based on a total weight of the modified conjugated diene-based polymer.

According to an embodiment of the present invention, the modified conjugated diene-based polymer may include a repeating unit derived from a conjugated diene-based monomer and a functional group derived from a modifier, and here, the repeating unit derived from a conjugated diene-based monomer may mean a repeating unit formed by a conjugated diene-based monomer during polymerization, and the functional group derived from a modifier may mean a functional group derived from a modifier, which is present at least one terminal of an active polymer through the reaction or coupling between an active polymer prepared by the polymerization of the conjugated diene-based monomer and the modifier.

According to an embodiment of the present invention, the conjugated diene-based monomer may be one or more selected from the group consisting of 1,3-butadiene, 2,3-dimethyl-1,3-butadiene, piperylene, 3-butyl-1,3-octadiene, isoprene, 2-phenyl-1,3-butadiene and 2-halo-1,3-butadiene (halo means a halogen atom).

In addition, the modified conjugated diene-based polymer may be a copolymer further including a repeating unit derived from an aromatic vinyl-based monomer and in this case, may include 30 wt% or more, or 30 wt% to 50 wt% of the repeating unit derived from the aromatic vinyl-based monomer. Preferably, the present invention may not include the repeating unit derived from the aromatic vinyl-based monomer.

In case of a polymer including a repeating unit derived from an aromatic vinyl-based monomer, the aromatic vinyl monomer may be, for example, one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene.

In another embodiment, the modified conjugated diene-based polymer may be a copolymer further including a repeating unit derived from a diene-based monomer of 1 to 10 carbon atoms together with the repeating unit derived from the conjugated diene-based monomer. The repeating unit derived from the diene-based monomer may be a repeating unit derived from a diene-based monomer which is different from the conjugated diene-based monomer, and the diene-based monomer which is different from the conjugated diene-based monomer may be, for example, 1,2-butadiene. If the modified conjugated diene-based polymer is a copolymer further including a diene-based monomer, the modified conjugated diene-based polymer may include the repeating unit derived from the diene-based monomer

in greater than 0 wt% to 1 wt%, greater than 0 wt% to 0.1 wt%, greater than 0 wt% to 0.01 wt%, or greater than 0 wt% to 0.001 wt%, and within this range, effects of preventing gel formation may be achieved.

The modified conjugated diene-based polymer according to an embodiment of the present invention may have a number average molecular weight (Mn) of 1,000 g/mol to 2,000,000 g/mol, 10,000 g/mol to 1,000,000 g/mol, or 100,000 g/mol to 1,000,000 g/mol, preferably, 200,000 g/mol to 1,000,000 g/mol, or 300,000 g/mol to 700,000 g/mol. Within this range, excellent effects of rolling resistance and wet skid resistance may be achieved. In another embodiment, the modified conjugated diene-based polymer may have molecular weight distribution (PDI; MWD; Mw/Mn) of 1.00 or more to less than 1.70, or 1.10 or more to less than 1.70, and within this range, excellent effects of tensile properties, viscoelasticity properties, and balance between physical properties may be achieved. At the same time, the modified conjugated diene-based polymer has a unimodal shape molecular weight distribution curve by gel permeation chromatography (GPC), and this shape is molecular weight distribution shown by a polymer polymerized by continuous polymerization and may mean that the modified conjugated diene-based polymer has uniform properties. That is, the modified conjugated diene-based polymer according to an embodiment of the present invention is prepared by continuous polymerization, and has a unimodal shape molecular weight distribution curve and molecular weight distribution of 1.00 or more and less than 1.70. By satisfying the above-described physical properties at the same time, excellent processability and excellent levels of viscoelasticity properties such as rolling resistance and road surface resistance may be achieved.

In addition, the modified conjugated diene-based polymer may have the Si content of 100 ppm or more, 100 ppm to 10,000 ppm, 100 ppm to 5,000 ppm, 100 ppm to 1,000 ppm or 100 ppm to 500 ppm, based on a weight, and within this range, a rubber composition including the modified conjugated diene-based polymer may have excellent effects of physical properties including tensile properties and viscoelasticity properties. The Si content may mean the content of Si atoms present in the modified conjugated diene-based polymer. Meanwhile, the Si atom may be derived from a functional group derived from a modifier.

The Si content may be measured through, for example, an ICP analysis method, and the ICP analysis method may be conducted using an inductively coupled plasma optical emission spectroscopy (ICP-OES; Optima 7300DV). If the inductively coupled plasma optical emission spectroscopy is used, measurement is performed by adding about 0.7 g of a specimen to a platinum (Pt) crucible, adding about 1 mL of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:

1) step 1: initial temp 0°C, rate (temp/hr) 180°C/hr, temp (holdtime) 180°C (1hr);
2) step 2: initial temp 180°C, rate (temp/hr) 85°C/hr, temp (holdtime) 370°C (2hr); and
3) step 3: initial temp 370°C, rate (temp/hr) 47°C/hr, temp (holdtime) 510°C (3hr),

adding 1 mL of concentrated nitric acid (48 wt%) and 20 μl of concentrated hydrofluoric acid (50 wt%) to a residue, sealing the platinum crucible and shaking for 30 minutes or more, adding 1 mL of boric acid to the specimen, storing at 0°C for 2 hours or more, diluting in 30 ml of ultrapure water, and performing incineration.

In this case, the specimen is a modified conjugated diene-based polymer from which solvents are removed by putting in hot water heated with steam, and residual monomer, residual modifier and oil are removed therefrom.

In addition, the modified conjugated diene-based polymer according to an embodiment of the present invention may have a cold flow of 1.00 or less, 0.90 or less, 0.85 or less or 0.80 or less. In addition, though the lower limit is not specifically defined, in view of preventing the deterioration of other viscoelasticity properties and mechanical properties, 0.10 or more, 0.30 or more, 0.50 or more or 0.60 or more may be preferable. Particularly, the modified conjugated diene-based polymer may satisfy the above-described molecular weight distribution curve, molecular weights, molecular weight distribution and the Si content as well as the cold flow in the above-described ranges at the same time. The cold flow may be an index of the storage stability and forming stability of the modified conjugated diene-based polymer. Particularly, if the cold flow value decreases, storage stability and forming stability of a rubber composition including the polymer may be improved. If the cold flow of the polymer is greater than 1.00, the storage stability and forming stability may be deteriorated considerably, and if the polymer is compounded into a rubber composition and stored, the quality may be adversely affected.

Generally, in order to improve the compatibility with a filler, if a modified polymer using a specific modifier helpful for the improvement of the compatibility, particularly, a terminal modified polymer is formed, a polymer chain mainly has a linear structure. However, if the ratio of the polymer chain with a linear structure is high, cold flow increases, and flowability increases. Accordingly, the storage stability and forming stability are adversely affected, and if a rubber composition is compounded, stored and used, its quality may be adversely affected. In order to improve the defects, modification is conducted using a modifier which may form a branch type structure, and then, the deterioration of the cold flow properties may be partially prevented, but a branch chain may increase, and defects of markedly degrading rolling resistance during compounding a rubber composition may arise.

The present invention is characterized in providing a modified conjugated diene-based polymer having a low

value of cold flow, while maintaining an excellent level of rolling resistance during compounding a rubber composition, through forming a polymer product mainly having a polymer chain of a linear structure and partially having a branch structure.

A modified conjugated diene-based polymer having a low value of cold flow and excellent rolling resistance when compounding a rubber composition may be shown by mixing two types of modifiers having different numbers of reactive functional groups which may react with an active polymer, and using as a modifier. Particularly, as explained later, by mixing a modifier having five or less reactive functional groups and a modifier having greater than five reactive functional groups and using, the above-described physical properties may be achieved.

In addition, the modified conjugated diene-based polymer according to an embodiment of the present invention may have the glass transition temperature (Tg) of -100°C to - 50°C, preferably, -90°C to -60°C. Particularly, the modified conjugated diene-based polymer may satisfy the above-described molecular weight distribution curve, molecular weights, molecular weight distribution, Si content and cold flow as well as the glass transition temperature in the above-described ranges at the same time. The glass transition temperature may be an index of abrasion properties in a rubber composition including a modified conjugated diene-based polymer, and particularly, if the glass transition temperature decreases, the abrasion resistance during compounding into a rubber composition may increase.

Likewise, according to an embodiment of the present invention, if the glass transition temperature of the modified conjugated diene-based polymer satisfies -100°C to - 50°C, tensile properties and viscoelasticity properties may be excellent and at the same time, markedly improving effects of abrasion resistance may be achieved.

In addition, the modified conjugated diene-based polymer may have the N content of 50 ppm or more, 100 ppm or more, 100 ppm to 10,000 ppm or 100 ppm to 5,000 ppm based on a total weight, and within this range, a rubber composition including a modified conjugated diene-based polymer may show excellent mechanical properties such as tensile properties and viscoelasticity properties. The N content may mean the content of N atoms present in the modified conjugated diene-based polymer, and in this case, the N atom may be derived from a functional group derived from a modifier.

In addition, the N content may be measured through an NSX analysis method, and the NSX measurement method may use a quantitative analyzer of a trace amount of nitrogen (NSX-2100H) .

For example, in case of using the quantitative analyzer of a trace amount of nitrogen, the quantitative analyzer of a trace amount of nitrogen (Auto sampler, Horizontal furnace, PMT & Nitrogen detector) was turned on, carrier gas flow amounts were set to 250 ml/min for Ar, 350 ml/min for $O_2$, and 300 ml/min for ozonizer, a heater was set to 800°C, and the analyzer was stood for about 3 hours for stabilization. After stabilizing the analyzer, calibration curves of calibration curve ranges of 5 ppm, 10 ppm, 50 ppm, 100 ppm and 500 ppm were made using Nitrogen standard (AccuStandard S-22750-01-5 ml), and an area corresponding to each concentration was obtained. Then, by using the ratios of concentrations to areas, a straight line was made. After that, a ceramic boat holding 20 mg of a specimen was put in the auto sampler of the analyzer and measurement was conducted to obtain an area. By using the area of the specimen thus obtained and the calibration curve, the N content was calculated.

In this case, the specimen is a modified conjugated diene-based polymer from which solvents are removed by putting the specimen in hot water heated by steam and stirring, and may be a specimen from which remaining monomers, remaining modifiers and oil are removed. In addition, if an oil is added to the specimen, the specimen may be obtained after extracting (removing) the oil.

In addition, the modified conjugated diene-based polymer may have a mooney viscosity at 100°C of 30 or more, 40 to 150, or 40 to 140, and within this range, processability and productivity may be excellent.

In addition, the modified conjugated diene-based polymer according to an embodiment of the present invention may preferably satisfy the 1,2-vinyl bond content of 30.0 wt% or less based on the total weight of the polymer. The vinyl content may mean the wt% of not 1,4-added but 1,2-added conjugated diene-based monomer with respect to a conjugated diene-based copolymer composed of a monomer having a vinyl group and an aromatic vinyl-based monomer, and may be affected by the termination point of polymerization reaction, reaction environments at the termination point of polymerization reaction during polymerization, etc.

Particularly, the 1,2-vinyl bond content may be 5 to 30 wt%, preferably, 5 to 15 wt%, and according to the 1,2-vinyl bond content, abrasion properties and rolling resistance properties may be affected. If the 1,2-vinyl bond content is 30 wt% or less, better abrasion properties may be secured. Thus, it is preferable that the 1,2-vinyl bond content satisfies the above-described range during preparing the modified conjugated diene-based polymer.

As described above, if the modified conjugated diene-based polymer according to the present invention satisfies the above-described conditions at the same time, a high modification ratio may be obtained, and by being applied in a rubber composition, the viscoelasticity properties, abrasion resistance, storage stability and forming stability of the rubber composition may be improved to excellent levels.

In addition, the modified conjugated diene-based polymer according to the present invention may be prepared so as to satisfy the above-described unimodal molecular weight distribution curve shape, molecular weights, molecular weight distribution, glass transition temperature, cold flow and Si content through a preparation method in which the

polymerization temperature, polymerization time, amounts used of reactants are controlled.

According to an embodiment of the present invention, the present invention provides a method for preparing a modified conjugated diene-based polymer, including: polymerizing a conjugated diene-based monomer in the presence of a polymerization initiator in a hydrocarbon solvent to prepare an active polymer (S1); and reacting the active polymer prepared in step (S1) with a modifier (S2), wherein polymerization reaction (S1) and modification reaction (S2) are continuously performed, step (S1) is performed in two or more polymerization reactors, a polymerization conversion ratio in a first polymerization reactor among the polymerization reactors is 50% or less, and the modifier includes at least two types of modifiers having different number of reactive functional groups. Particularly, the modifier includes a first modifier and a second modifier, the first modifier is a modifier having greater than five reactive functional groups which are capable of reacting with the active polymer, and the second reactor is a modifier having five or less reactive functional groups which are capable of reacting with the active polymer.

In addition, the above-described modified conjugated diene-based polymer may be one prepared by the preparation method.

Meanwhile, the modifier modifying the modified conjugated diene-based polymer in the present invention may be a modifier having affinity with silica, and the modified conjugated diene-based polymer may include a derived unit from the modifier in at least one terminal of a chain.

Particularly, the modifier may be a modifier including a functional group having affinity with silica in a compound used as the modifier. Such a functional group having affinity with silica may mean a functional group having excellent affinity with a filler, particularly, a silica-based filler, and capable of making interaction between the silica-based filler and the functional group derived from the modifier.

The modifier may be, for example, an alkoxysilane-based modifier, particularly, an alkoxysilane-based modifier containing one or more heteroatoms including a nitrogen atom, an oxygen atom, or a sulfur atom. If the alkoxysilane-based modifier is used, through substitution reaction between an anionic active part positioned at one terminal of an active polymer and an alkoxy group of the alkoxysilane-based modifier, the one terminal of the active polymer may be modified or coupled into a bonding state with a silyl group. As described above, according to an embodiment of the present invention, in the modifier, the reactive functional group which is capable of reacting with the active polymer may particularly include an alkoxy group, and particularly, the alkoxy group may be combined with a silicon (Si) atom.

According to an embodiment of the present invention, the modifier may include at least two types of modifiers, i.e., a first modifier and a second modifier, and particularly, the first modifier may be a modifier having greater than five reactive functional groups which may react with the active polymer, and the second modifier may be a modifier having five or less reactive functional groups which may react with the active polymer.

Particularly, the first modifier may include a compound represented by Formula 1 below, and the second modifier may include at least one or more compounds among the compounds represented by Formula 2 and Formula 3 below.

[Formula 1]

$$\left(R_{a5}-R_{a4}\right)_{m2}N\left(R_{a1}-Si(OR_{a2})_{m1}(R_{a3})_{3-m1}\right)_{3-m2}$$

In Formula 1, $R_{a1}$ and $R_{a4}$ may be each independently a single bond, or an alkylene group of 1 to 10 carbon atoms, $R_{a2}$ and $R_{a3}$ may be each independently an alkyl group of 1 to 10 carbon atoms, $R_{a5}$ may be a hydrogen atom, an alkyl group of 1 to 10 carbon atoms, a divalent, trivalent or tetravalent alkylsilyl group substituted with an alkyl group of 1 to 10 carbona toms, a five-member heterocyclic group of 2 to 4 carbon atoms, including one or more heteroatoms selected from the group consisting of N, O and S, wherein the heterocyclic group may be substituted or unsubstituted with an alkyl group of 1 to 10 carbon atoms or a (trialkoxysilyl)alkyl group, and in the (trialkoxysilyl) alkyl group, the alkyl group may be an alkyl group of 1 to 10 carbon atoms, and the alkoxy group may be an alkoxy group of 1 to 10 carbon atoms, $m_1$ may be an integer of 1 to 3, and $m_2$ may be an integer of 0 to 2, where total -($OR_{a2}$) groups may be greater than five.

In another embodiment, the compound represented by Formula 1 may be a compound represented by Formula 1-1 below.

[Formula 1-1]

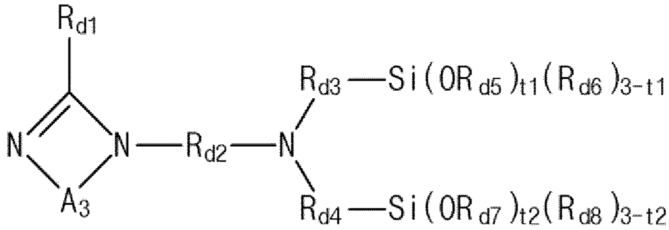

In Formula 1-1, $R_{d1}$ may be hydrogen or an alkyl group of 1 to 10 carbon atoms, $R_{d2}$ to $R_{d4}$ may be each independently an alkylene group of 1 to 10 carbon atoms, $R_{d5}$ to $R_{d8}$ may be each independently an alkyl group of 1 to 10 carbon atoms, $A_3$ may be

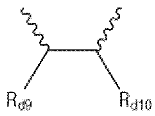
or
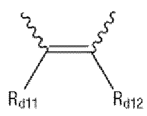
,

where $R_{d9}$ to $R_{d12}$ may be each independently hydrogen or an alkyl group of 1 to 10 carbon atoms, and $t_1$ and $t_2$ may be each independently 3.

Particularly, in Formula 1, $R_{a1}$ and $R_{a4}$ may be each independently a single bond, or an alkylene group of 1 to 5 carbon atoms, $R_{a2}$ and $R_{a3}$ may be each independently an alkyl group of 1 to 5 carbon atoms, $R_{a5}$ may be a hydrogen atom, an alkyl group of 1 to 5 carbon atoms, a tetravalent alkylsilyl group substituted with an alkyl group of 1 to 5 carbon atoms, a five-member heterocyclic group of 2 to 4 carbon atoms, including one or more heteroatoms selected from the group consisting of N, O and S, wherein the heterocyclic group may be substituted or unsubstituted with an alkyl group of 1 to 5 carbon atoms or a (trialkoxysilyl)alkyl group, and in the (trialkoxysilyl) alkyl group, the alkyl group may be an alkyl group of 1 to 5 carbon atoms, and the alkoxy group may be an alkoxy group of 1 to 5 carbon atoms. In addition, the five-member heterocyclic group may particularly be a five-member heterocyclic group containing N.

In addition, the compound represented by Formula 1 according to another embodiment of the present invention may particularly be the compound represented by Formula 1-1, and in Formula 1-1, $R_{d1}$ may be hydrogen or an alkyl group of 1 to 5 carbon atoms, $R_{d2}$ to $R_{d4}$ may be each independently an alkylene group of 1 to 5 carbon atoms, $R_{d5}$ to $R_{d8}$ may be each independently an alkyl group of 1 to 5 carbon atoms, and $A_3$ may be

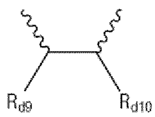
or
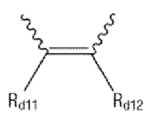
,

where $R_{d9}$ to $R_{d12}$ may be each independently hydrogen, or an alkyl group of 1 to 5 carbon atoms.

More particularly, the compound represented by Formula 1 may be one or more selected from the group consisting of N,N-bis(3-(trimethoxysilyl)propyl)-methyl-1-amine, N,N-bis(3-(triethoxysilyl)propyl)-methyl-1-amine, tri(trimethoxysilyl)amine, tris(3-(trimethoxysilyl)propyl)amine, N-(3-(1H-imidazol-1-yl)propyl)-3-(triethoxysilyl)-N-(3-(triethoxysilyl)propyl)propan-1-amine, 3-(4,5-dihydro-1H-imidazol-1-yl)-N,N-bis(3-(triethoxysilyl)propyl)propan-1-amine, N-(3-(1H-1,2,4-triazole-1-yl)propyl)-3-(trimethoxysilyl)-N-((trimethoxysilyl)propyl)propan-1-amine, N-(3-(1H-1,3,5-triazole-1-yl)propyl)-3-(trimethoxysilyl)-N-((trimethoxysilyl)propyl)propan-1-amine) and 3-(trimethoxysilyl)-N-(3-(trimethoxysilyl)propyl)-N-(3-(1-(3-(trimethoxysilyl)propyl)-1H-1,2,4-triazol-3-yl)propyl)propan-1-amine.

[Formula 2]

$$\left(R_{b5}-R_{b4}\right)_{n2}N\left(R_{b1}-Si(OR_{b2})_{n1}(R_{b3})_{3-n1}\right)_{3-n2}$$

In Formula 2, $R_{b1}$ may be a single bond, or an alkylene group of 1 to 10 carbon atoms, $R_{b2}$ and $R_{b3}$ may be

each independently an alkyl group of 1 to 10 carbon atoms or $-[R_{b6}O]_{n3}-R_{b7}$, $R_{b4}$ may be a single bond, an alkylene group of 1 to 10 carbon atoms, or $-[R_{b6}O]_{n3}$, $R_{b5}$ may be a hydrogen atom, an alkyl group of 1 to 10 carbon atoms, or a divalent, trivalent or tetravalent alkylsilyl group substituted with an alkyl group of 1 to 10 carbon atoms, $R_{b6}$ may be an alkylene group of 1 to 10 carbon atoms, $R_{b7}$ may be an alkyl group of 1 to 10 carbon atoms, $n_1$ may be an integer of 1 to 3, $n_2$ may be an integer of 0 to 2, and $n_3$ may be an integer of 1 to 30, where total $-(OR_{b2})$ groups may be five or less. In another embodiment, in Formula 2, at least one of $R_{b2}$ to $R_{b4}$ may include a $-[R_{b6}O]_{n3}$ unit.

Particularly, in Formula 2, $R_{b1}$ may be a single bond, or an alkylene group of 1 to 5 carbon atoms, $R_{b2}$ and $R_{b3}$ may be each independently an alkyl group of 1 to 5 carbon atoms or $-[R_{b6}O]_{n3}-R_{b7}$, $R_{b4}$ may be a single bond, an alkylene group of 1 to 5 carbon atoms, or $-[R_{b6}O]_{n3}$, $R_{b5}$ may be a hydrogen atom, an alkyl group of 1 to 5 carbon atoms, or a tetravalent alkylsilyl group substituted with an alkyl group of 1 to 5 carbon atoms, $R_{b6}$ may be an alkylene group of 1 to 5 carbon atoms, $R_{b7}$ may be an alkyl group of 1 to 5 carbon atoms, $n_1$ may be an integer of 2 or 3, $n_2$ may be an integer of 0 to 2, and $n_3$ may be an integer of 1 to 10.

More particularly, the compound represented by Formula 2 may be one or more selected from the group consisting of N,N-bis(3-(dimethoxy(methyl)silyl)propyl)-methyl-1-amine, N,N-bis(3-(diethoxy(methyl)silyl)propyl)-methyl-1-amine, N,N-diethyl-3-(trimethoxysilyl)propan-1-amine, N,N-diethyl-3-(triethoxysilyl)propan-1-amine, N,N-bis(3-(diethoxy(methyl)silyl)propyl)-1,1,1-trimethylsilanamine, N-(2,5,8,11,14-pentaoxahexadecan-16-yl)-N-(3-(triethoxysilyl)propyl)-2,5,8,11,14-pentaoxahexadecan-16-amine and N-(3,6,9,12-tetraoxahexadecyl)-N-(3-(triethoxysilyl)propyl)-3,6,9,12-tetraoxahexadecan-1-amine.

[Formula 3]

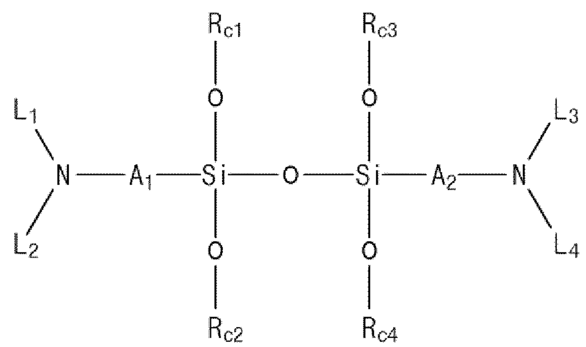

In Formula 3, $A_1$ and $A_2$ may be each independently an alkylene group of 1 to 20 carbon atoms, $R_{c1}$ to $R_{c4}$ may be each independently an alkyl group of 1 to 20 carbon atoms, and $L_1$ to $L_4$ may be each independently an alkyl group of 1 to 20 carbon atoms, an aryl group of 6 to 20 carbon atoms, or a divalent, trivalent or tetravalent alkylsilyl group substituted with an alkyl group of 1 to 10 carbon atoms.

Particularly, in Formula 3, $A_1$ and $A_2$ may be each independently an alkylene group of 1 to 10 carbon atoms, $R_{c1}$ to $R_{c4}$ may be each independently an alkyl group of 1 to 10 carbon atoms, and $L_1$ to $L_4$ may be each independently an alkyl group of 1 to 10 carbon atoms, an aryl group of 6 to 12 carbon atoms, or a tetravalent alkylsilyl group substituted with an alkyl group of 1 to 5 carbon atoms.

More particularly, the compound represented by Formula 3 may be one or more selected from the group consisting of 3,3'-(1,1,3,3-tetramethoxydisiloxane-1,3-diyl)bis(N,N-dimethylpropan-1-amine), 3,3'-(1,1,3,3-tetraethoxydisiloxane-1,3-diyl)bis(N,N-dimethylpropan-1-amine), 3,3'-(1,1,3,3-tetrapropoxydisiloxane-1,3-diyl)bis(N,N-dimethylpropan-1-amine), 3,3'-(1,1,3,3-tetramethoxydisiloxane-1,3-diyl)bis(N,N-diethylpropan-1-amine), 3,3'-(1,1,3,3-tetramethoxydisiloxane-1,3-diyl)bis(N,N-dipropylpropan-1-amine), 3,3'-(1,1,3,3-tetraethoxydisiloxane-1,3-diyl)bis(N,N-diethylpropan-1-amine), 3,3'-(1,1,3,3-tetrapropoxydisiloxane-1,3-diyl)bis(N,N-diethylpropan-1-amine), 3,3'-(1,1,3,3-tetraethoxydisiloxane-1,3-diyl)bis(N,N-dipropylpropan-1-amine), 3,3'-(1,1,3,3-tetrapropoxydisiloxane-1,3-diyl)bis(N,N-dipropylpropan-1-amine), 3,3'-(1,1,3,3-tetramethoxydisiloxane-1,3-diyl)bis(N,N-diethylmethan-1-amine), 3,3'-(1,1,3,3-tetraethoxydisiloxane-1,3-diyl)bis(N,N-diethylmethan-1-amine), 3,3'-(1,1,3,3-tetrapropoxydisiloxane-1,3-diyl)bis(N,N-diethylmethan-1-amine), 3,3'-(1,1,3,3-tetramethoxydisiloxane-1,3-diyl)bis(N,N-dimethylmethan-1-amine), 3,3'-(1,1,3,3-tetramethoxydisiloxane-1,3-diyl)bis(N,N-dipropylmethan-1-amine), 3,3'-(1,1,3,3-tetrapropoxydisiloxane-1,3-diyl)bis(N,N-dimethylmethan-1-amine), 3,3'-(1,1,3,3-tetrapropoxydisiloxane-1,3-diyl)bis(N,N-dipropylmethan-1-amine), 3,3'-(1,1,3,3-tetraethoxydisiloxane-1,3-diyl)bis(N,N-dimethylmethan-1-amine), 3,3'-(1,1,3,3-tetraethoxydisiloxane-1,3-diyl)bis(N,N-dipropylmethan-1-amine), N,N'-((1,1,3,3-tetramethoxydisiloxane-1,3-diyl)bis(propan-3,1-diyl))bis(1,1,1-trimethyl-N-(trimethylsilyl)silanamine, N,N'-((1,1,3,3-tetraethoxydisiloxane-1,3-diyl)bis(propan-3,1-diyl))bis(1,1,1-trimethyl-N-(trimethylsilyl)silanamine), N,N'-((1,1,3,3-tetrapropoxydisiloxane-1,3-diyl)bis(propan-3,1-diyl))bis(1,1,1-trimethyl-N-(trimethylsilyl)silanamine), N,N'-((1,1,3,3-tetramethoxydisiloxane-1,3-diyl)bis(propan-3,1-diyl))bis(1,1,1-trimethyl-N-phenylsilanamine), N,N'-((1,1,3,3-tetraethoxydisiloxane-1,3-diyl)bis(propan-3,1-diyl))bis(1,1,1-trimethyl-N-phenylsilanamine, and N,N'-((1,1,3,3-tetrapropoxydisiloxane-1,3-diyl)bis(propan-3,1-diyl))bis(1,1,1-trimethyl-N-phenylsilanamine).

The modified conjugated diene-based polymer according to an embodiment of the present invention may be a polymer including a derived unit from the modifier represented by Formula 1 and a derived unit from the modifier represented by Formula 2, a polymer including a derived unit from the modifier represented by Formula 1 and a derived unit from the modifier represented by Formula 3, or a mixture thereof.

In addition, according to an embodiment of the present invention, the modifier may include the first modifier and the second modifier in an equivalent ratio of 1:9 to 5:5, preferably, 1:9 to 4:6, more preferably, 1:9 to 3:7. If the content ratio of the modifiers is satisfied, rolling resistance and cold flow may be improved even further.

Hereinafter, the modified conjugated diene-based polymer thus prepared, and the characteristics of the modifier used in the reaction are overlapped with the above-description, and the explanation thereon will be omitted.

The hydrocarbon solvent is not specifically limited, but may be, for example, one or more selected from the group consisting of n-pentane, n-hexane, n-heptane, isooctane, cyclohexane, toluene, benzene and xylene.

According to an embodiment of the present invention, the modification initiator may include an organometallic compound, and the organometallic compound may be used in 0.01 mmol to 10 mmol, 0.05 mmol to 5 mmol, 0.1 mmol to 2 mmol, 0.1 mmol to 1 mmol, or 0.15 to 0.8 mmol based on total 100 g of the monomer. In addition, the organometallic compound may be, for example, one or more selected from the group consisting of methyllithium, ethyllithium, propyllithium, isopropyllithium, n-butyllithium, s-butyllithium, t-butyllithium, hexyllithium, n-decyllithium, t-octyllithium, phenyllithium, 1-naphthyl lithium, n-eicosyl lithium, 4-butylphenyl lithium, 4-tolyl lithium, cyclohexyl lithium, 3,5-di-n-heptylcyclohexyl lithium, 4-cyclopentyl lithium, naphthyl sodium, naphthyl potassium, lithium alkoxide, sodium alkoxide, potassium alkoxide, lithium sulfonate, sodium sulfonate, potassium sulfonate, lithium amide, sodium amide, potassium amide, and lithium isopropylamide.

The polymerization of step (S1) may be, for example, an anionic polymerization, and particularly, a living anionic polymerization by which an anionic active part is formed at the polymerization terminal through a propagation reaction by anions. In addition, the polymerization of step (S1) may be a polymerization with heating, an isothermal polymerization, or a polymerization at a constant temperature (adiabatic polymerization). Here, the polymerization at a constant temperature means a polymerization method including a step of polymerizing using self-generated heat of reaction without optionally applying heat after adding an organometallic compound, and the polymerization with heating means a polymerization method including injecting the organometallic compound and then, increasing the temperature by optionally applying heat. The isothermal polymerization means a polymerization method by which the temperature of a polymer is kept constant by increasing heat by applying heat or taking heat after adding the organometallic compound.

In addition, according to an embodiment of the present invention, the polymerization of step (S1) may be performed by further adding a diene-based compound of 1 to 10 carbon atoms in addition to the conjugated diene-based monomer, and in this case, effects of preventing the formation of gel on the wall of a reactor during operation for a long time may be achieved. The diene-based compound may include, for example, 1,2-butadiene.

The polymerization of step (S1) may be conducted in a temperature range of 100°C or less, 50°C to 100°C, or 50°C to 80°C. Within the range, the conversion ratio of the polymerization reaction may increase, the mooney viscosity, the number average molecular weight, the molecular weight distribution, the cold flow and the glass transition temperature of the polymer may be satisfied, while controlling the molecular weight distribution of the polymer. Accordingly, excellent improving effects of physical properties may be achieved.

The active polymer prepared by step (S1) may mean a polymer in which a polymer anion and an organometallic cation are coupled.

In addition, according to an embodiment of the present invention, the method for preparing a modified conjugated diene-based polymer may be performed in a plurality of reactors including two or more polymerization reactors and a modification reactor by a continuous polymerization method. In a particular embodiment, step (S1) may be performed continuously in two or more polymerization reactors including a first reactor, and the number of the polymerization reactors may be flexibly determined according to reaction conditions and environments. The continuous polymerization method may mean a reaction process of continuously supplying reactants to a reactor and continuously discharging reaction products thus produced. By the continuous polymerization method, productivity and processability may be excellent, and excellent effects of uniformity of the polymer thus prepared may be achieved.

In addition, according to an embodiment of the present invention, in case where the active polymer is continuously prepared in the polymerization reactor, a polymerization conversion ratio in the first reactor may be 50% or less, from 10% to 50%, or from 20% to 50%, and within this range, side reactions generated while forming a polymer after initiating polymerization reaction may be restrained and a polymer with a branch structure may be induced during polymerization. Thus, the above-described ranges of the mooney viscosity, number average molecular weight, molecular weight distribution, cold flow and glass transition temperature may be satisfied, and effects of excellent improvement of physical properties may be achieved.

In this case, the polymerization conversion ratio may be controlled according to the reaction temperature, the retention time in the reactor, etc.

The polymerization conversion ratio may be determined, for example, by measuring the solid concentration in a polymer solution phase including the polymer during polymerizing a polymer. In a particular embodiment, in order to secure the polymer solution, a cylinder type container is installed at the outlet of each polymerization reactor, and a certain amount of the polymer solution is filled in the cylinder type container. Then, the cylinder type container is separated from the reactor, the weight (A) of the cylinder filled with the polymer solution is measured, the polymer solution filled in the cylinder type container is transported to an aluminum container, for example, an aluminum dish, the weight (B) of the cylinder type container from which the polymer solution is removed is measured, the aluminum container containing the polymer solution is dried in an oven of 140°C for 30 minutes, the weight (C) of a dried polymer is measured, and calculation is performed according to the following Mathematical Equation 1:

[Mathematical Equation 1]

$$\text{Polymer conversion ratio (\%)} = \frac{\text{Weight}\,(C)}{[(\text{Weight}(A) - \text{Weight}\,(B))\ \text{x total solid content of each reactor (wt\%,}TSC)]}\ X\ 100$$

Meanwhile, the polymer polymerized in the first reactor may be transported to polymerization reactors before a modification reactor in order, and polymerization may be performed until the final polymerization conversion ratio becomes 95% or more. After performing the polymerization in the first reactor, the polymerization conversion ratio in the second reactor, or each reactor from the second reactor to the polymerization reactor before the modification reactor may be appropriately controlled to control molecular weight distribution.

Meanwhile, in step (S1), during preparing an active polymer, the retention time of a polymer in the first reactor may be from 1 minute to 40 minutes, from 1 minute to 30 minutes, or from 5 minutes to 30 minutes, and within this range, the control of a polymerization conversion ratio is easy, and thus, the mooney viscosity, number average molecular weight, molecular weight distribution, cold flow and glass transition temperature in the above-described ranges may be satisfied, and effects of improving physical properties may be excellent.

The term "polymer" in the present invention may mean an intermediate of a polymer type, which is under polymerization in each reactor during performing step (S1) or may mean a polymer with a polymerization conversion ratio of less than 90% under polymerization in a reactor, after finishing step (S1) or step (S2) and prior to obtaining an active polymer or a modified conjugated diene-based polymer.

Meanwhile, the polymerization of step (S1) may be performed by including a polar additive, and the polar additive may be added in a ratio of 0.001 g to 50 g, or 0.002 g to 0.1 g based on total 100 g of the monomer. In another embodiment, the polar additive may be added in a ratio of greater than 0 g to 1 g, 0.01 g to 1 g, or 0.1 g to 0.9 g based on total 100 g of the organometallic compound. In case of injecting the polar additive in the above-described range, the glass transition temperature, mooney viscosity and 1,2-vinyl bond content in the above-described ranges may be satisfied.

The polar additive may be, for example, one or more selected from the group consisting of tetrahydrofuran, ditetrahydrofurylpropane, diethyl ether, cyclopentyl ether, dipropyl ether, ethylene methyl ether, ethylene dimethyl ether, diethyl glycol, dimethyl ether, tert-butoxy ethoxy ethane, bis(3-dimethylaminoethyl)ether, (dimethylaminoethyl) ethyl ether, trimethylamine, triethylamine, tripropylamine, and tetramethylethylenediamine, and may preferably be triethylamine, or tetramethylethylenediamine. If the polar additive is included, and if a conjugated diene-based monomer is, or a conjugated diene-based monomer and an aromatic vinyl-based monomer are copolymerized, the difference of their reaction rates may be compensated, and effects of inducing easy formation of a random copolymer may be achieved.

According to an embodiment of the present invention, in the reaction of step (S2), the modifier may be used in an amount of 0.01 mmol to 10 mmol based on total 100 g of the monomer. In another embodiment, the modifier may be used in a molar ratio of 1:0.1 to 10, 1:0.1 to 5, or 1:0.1 to 1:3, based on 1 mol of the organometallic compound of a modification initiator in step (S1). The molar ratio of the modifier and the organometallic compound, and the injection amount of the modifier against the monomer may substantially affect the glass transition temperature of the polymer thus prepared, and an appropriate ratio within the above-described range may preferably be selected and applied if possible.

In addition, according to an embodiment of the present invention, the modifier may include at least two types of modifiers. For example, the modifier may include both a modifier which is capable of forming a polymer chain into a linear structure and a modifier which is capable of forming a polymer chain into a branch structure after modification. In case of using two or more types of modifiers having the above-described characteristics, a linear polymer chain and a branch type polymer chain may be mixed in the polymer, and accordingly, the cold flow of the polymer may be reduced. Accordingly, a polymer satisfying all the physical properties of the above-described modified conjugated diene-based polymer may be prepared.

According to the present invention, a rubber composition including the modified conjugated diene-based polymer is provided.

The rubber composition may include the modified conjugated diene-based polymer in the content of 10 wt% or more, 10 wt% to 100 wt%, or 20 wt% to 90 wt%, and within this range, mechanical properties such as tensile strength and abrasion resistance are excellent, and effects of excellent balance between physical properties may be achieved.

In addition, the rubber composition may further include other rubber components as necessary in addition to the modified conjugated diene-based polymer, and in this case, the rubber component may be included in the content of 90 wt% or less based on the total weight of the rubber composition. In a particular embodiment, the other rubber components may be included in 1 part by weight to 900 parts by weight based on 100 parts by weight of the modified conjugated diene-based polymer.

The rubber component may be, for example, a natural rubber or a synthetic rubber, and may particularly be a natural rubber (NR) including cis-1,4-polyisoprene; a modified natural rubber which is obtained by modifying or purifying a common natural rubber, such as an epoxidized natural rubber (ENR), a deproteinized natural rubber (DPNR), and a hydrogenated natural rubber; and a synthetic rubber such as a styrene-butadiene copolymer (SBR), a polybutadiene (BR), a polyisoprene (IR), a butyl rubber (IIR), an ethylenepropylene copolymer, a polyisobutylene-co-isoprene, a neoprene, a poly(ethylene-co-propylene), a poly(styrene-co-butadiene), a poly(styrene-co-isoprene), a poly(styrene-co-isoprene-co-butadiene), a poly(isoprene-co-butadiene), a poly(ethylene-co-propylene-co-diene), a polysulfide rubber, an acryl rubber, a urethane rubber, a silicone rubber, an epichlorohydrin rubber, and a halogenated butyl rubber, and any one or mixtures two or more thereof may be used.

The rubber composition may include a filler in 0.1 parts by weight to 200 parts by weight, or 10 parts by weight to 120 parts by weight based on 100 parts by weight of the modified conjugated diene-based polymer of the present invention. The filler may be, for example, a silica-based filler, particularly, wet silica (hydrated silicate), dry silica (anhydrous silicate), calcium silicate, aluminum silicate, or colloid silica. Preferably, the filler may be wet silica which has the most significant improving effects of destruction characteristics and compatible effects of wet grip. In addition, the rubber composition may further include a carbon black-based filler as necessary.

In another embodiment, if silica is used as the filler, a silane coupling agent for improving reinforcing and low exothermic properties may be used together. Particular examples of the silane coupling agent may include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, or dimethoxymethylsilylpropylbenzothiazolyltetrasulfide, and any one or mixtures of two or more thereof may be used. Preferably, bis(3-triethoxysilylpropyl)polysulfide or 3-trimethoxysilylpropylbenzothiazyltetrasulfide may be used in consideration of the improving effects of reinforcing properties.

In addition, in the rubber composition according to an embodiment of the present invention, since a modified conjugated diene-based polymer in which a functional group having high affinity with silica is brought in an active part is used as a rubber component, the compounding amount of the silane coupling agent may be smaller than a common case. Thus, the silane coupling agent may be used in 1 part by weight to 20 parts by weight, or 5 parts by weight to 15 parts by weight based on 100 parts by weight of silica. Within the above amount range, effects as a coupling agent may be sufficiently exhibited, and preventing effects of gelation of a rubber component may be achieved.

The rubber composition according to an embodiment of the present invention may be sulfur crosslinkable, and may further include a vulcanizing agent. The vulcanizing agent may particularly be a sulfur powder and may be included in 0.1 parts by weight to 10 parts by weight based on 100 parts by weight of a rubber component. Within this range, elasticity and strength required for a vulcanized rubber composition may be secured, and at the same time, an excellent low fuel consumption ratio may be achieved.

The rubber composition according to an embodiment of the present invention may further include various additives used in a common rubber industry in addition to the above components, particularly, a vulcanization accelerator, a process oil, a plasticizer, an antiaging agent, a scorch preventing agent, a zinc white, stearic acid, a thermosetting resin, or a thermoplastic resin.

The vulcanization accelerator may include, for example, thiazole-based compounds such as 2-mercaptobenzothiazole (M), dibenzothiazyldisulfide (DM), and N-cyclohexyl-2-benzothiazylsulfenamide (CZ), or guanidine-based compounds such as diphenylguanidine (DPG), in 0.1 parts by weight to 5 parts by weight based on 100 parts by weight of the rubber component.

The process oil acts as a softener in a rubber composition and may include, for example, a paraffin-based,

naphthene-based, or aromatic compound. An aromatic process oil may be used in consideration of tensile strength and abrasion resistance, and a naphthene-based or paraffin-based process oil may be used in consideration of hysteresis loss and properties at low temperatures. The process oil may be included in 100 parts by weight or less based on 100 parts by weight of the rubber component. Within the above-described range, the deterioration of the tensile strength and low exothermic properties (low fuel consumption ratio) of the vulcanized rubber may be prevented.

The antiaging agent may include, for example, N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a condensate of diphenylamine and acetone at high temperatures, in 0.1 parts by weight to 6 parts by weight based on 100 parts by weight of the rubber component.

The rubber composition according to an embodiment of the present invention may be obtained by mulling using a mulling apparatus such as a banbury mixer, a roll, and an internal mixer according to a mixing prescription. A rubber composition having low exothermic properties and good abrasion properties may be obtained by a vulcanization process after a molding process.

Therefore, the rubber composition may be useful to the manufacture of each member of a tire such as a tire tread, an under tread, a side wall, a carcass coating rubber, a belt coating rubber, a bead filler, a chafer, and a bead coating rubber, or to the manufacture of rubber products in various industries such as a vibration-proof rubber, a belt conveyor, and a hose.

Also, the present invention provides a tire manufactured using the rubber composition.

The tire may be a tire or include a tire tread.

## Examples

Hereinafter, the present invention will be explained in more detail referring to embodiments. However, embodiments according to the present invention may be modified into various other types, and the scope of the present invention should not be limited to the embodiments described below. The embodiments of the present invention are provided for completely explaining the present invention to a person having an average knowledge in the art.

### Example 1

To a first reactor among continuous reactors of three reactors connected in series, injected were a 1,3-butadiene solution in which 60 wt% of 1,3-butadiene was dissolved in n-hexane in a rate of 14.2 kg/h, n-hexane in a rate of 49.11 kg/h, a 1,2-butadiene solution in which 2.0 wt% of 1,2-butadiene was dissolved in n-hexane in a rate of 40 g/h, a solution in which 10 wt% of tetramethylethylenediamine was dissolved in n-hexane as a polar additive in a rate of 10.0 g/h, and an initiator solution in which 10 wt% of n-butyllithium was dissolved in n-hexane in a rate of 59.0 g/h. At this time, the temperature of the first reactor was controlled to maintain 65°C. At a point where a polymerization conversion ratio reached 48%, the polymer thus obtained was transported from the first reactor to a second reactor via a transport pipe.

Then, a 1,3-butadiene solution in which 60 wt% of 1,3-butadiene was dissolved in n-hexane was injected into the second reactor in a rate of 0.74 kg/h, the temperature of the second reactor was maintained to 65°C, and polymerization was continued. At a point where a polymerization conversion ratio reached 95% or more, the polymer was transported from the second reactor to a third reactor via a transport pipe.

Into the third reactor, a mixture solution of a solution in which 20 wt% of N-(3-(1H-imidazol-1-yl)propyl)-3-(triethoxysilyl)-N-(3-(triethoxysilyl)propyl)propan-1-amine was dissolved in n-hexane as a first modifier and a solution in which 20 wt% of N,N-bis(3-(dimethoxy(methyl)silyl)propyl)-methyl-1-amine was dissolved in n-hexane as a second modifier in an equivalent ratio of 0.3:0.7 was continuously supplied to perform modification reaction (molar ratio of n-butyllithium:total modifier = 1:1). The temperature of the third reactor was maintained to 65°C.

Then, to the polymerization solution discharged from the third reactor, a solution in which 30 wt% of IR1520 (BASF Co.) was dissolved in n-hexane as an antioxidant was injected in a rate of 167 g/h and stirred. The polymer thus obtained was put into hot water heated with steam and stirred to remove solvents to obtain a modified conjugated diene-based polymer.

### Example 2

A modified conjugated diene-based polymer was prepared by performing the same method as in Example 1 except for performing modification reaction by continuously supplying a mixture solution of a solution in which 20 wt% of N-(3-(1H-imidazol-1-yl)propyl)-3-(triethoxysilyl)-N-(3-(triethoxysilyl)propyl)propan-1-amine was dissolved in n-hexane as a first modifier and a solution in which 20 wt% of 3,3'-(1,1,3,3-tetramethoxydisiloxane-1,3-diyl)bis(N,N-diethylpropane-1-amine) was dissolved in n-hexane as a second modifier in an equivalent ratio of 0.3:0.7 to the third reactor, in Example 1.

**Example 3**

A modified conjugated diene-based polymer was prepared by performing the same method as in Example 1 except for performing modification reaction by continuously supplying a mixture solution of a solution in which 20 wt% of N-(3-(1H-imidazol-1-yl)propyl)-3-(triethoxysilyl)-N-(3-(triethoxysilyl)propyl)propan-1-amine was dissolved in n-hexane as a first modifier and a solution in which 20 wt% of N-(3,6,9,12-tetraoxahexadecyl)-N-(3-(triethoxysilyl)propyl)-3,6,9,12-tetraoxahexadecan-1-amine) was dissolved in n-hexane as a second modifier in an equivalent ratio of 0.3:0.7 to the third reactor, in Example 1.

**Example 4**

A modified conjugated diene-based polymer was prepared by performing the same method as in Example 1 except for performing modification reaction by continuously supplying a mixture solution of a solution in which 20 wt% of tris(3-(trimethoxysilyl)propyl) amine was dissolved in n-hexane as a first modifier and a solution in which 20 wt% of N,N-bis(3-(dimethoxy(methyl)silyl)propyl)-methyl-1-amine was dissolved in n-hexane as a second modifier in an equivalent ratio of 0.3:0.7 to the third reactor, in Example 1.

**Example 5**

A modified conjugated diene-based polymer was prepared by performing the same method as in Example 1 except for transporting a polymer to the second reactor at a point where the conversion ratio in the first reactor reached 47%, and performing modification reaction by continuously supplying a mixture solution of a solution in which 20 wt% of tris(3-(trimethoxysilyl)propyl) amine was dissolved in n-hexane as a first modifier and a solution in which 20 wt% of N-(3,6,9,12-tetraoxahexadecyl)-N-(3-(triethoxysilyl)propyl)-3,6,9,12-tetraoxahexadecan-1-amine was dissolved in n-hexane as a second modifier in an equivalent ratio of 0.3:0.7 to the third reactor, in Example 1.

**Comparative Example 1**

A modified conjugated diene-based polymer was prepared by performing the same method as in Example 1 except for transporting a polymer to the second reactor at a point where the conversion ratio in the first reactor reached 46%, and the temperature was 55°C, and injecting a solution in which 2.0 wt% of tetrachlorosilane ($SiCl_4$) was dissolved in n-hexane as a coupling agent instead of the first and second modifiers at a rate of 40.0 g/h to the third reactor, in Example 1.

**Comparative Example 2**

An unmodified butadiene rubber CB24 of LANXESS Co. was purchased, and the physical properties thereof were measured.

**Comparative Example 3**

A modified conjugated diene-based polymer was prepared by performing the same method as in Example 1 except for transporting a polymer to the second reactor at a point where the conversion ratio in the first reactor reached 48%, and performing modification reaction by continuously supplying a solution in which 20 wt% of N,N-bis(3-(dimethoxy(methyl)silyl)propyl)-methyl-1-amine was dissolved in n-hexane as a modifier in the third reactor (molar ratio of n-butyllithium:modifier=1:1), in Example 1.

**Comparative Example 4**

A modified conjugated diene-based polymer was prepared by performing the same method as in Example 1 except for performing modification reaction by continuously supplying a solution in which 20 wt% of N-(3,6,9,12-tetraoxahexadecyl)-N-(3-(triethoxysilyl)propyl)-3,6,9,12-tetraoxahexadecan-1-amine was dissolved in n-hexane as a modifier (molar ratio of n-butyllithium:modifier=1:1), in Example 1.

**Comparative Example 5**

A modified conjugated diene-based polymer was prepared by performing the same method as in Example 1 except for transporting a polymer to the second reactor at a point where the conversion ratio in the first reactor reached

47%, and performing modification reaction by continuously supplying a solution in which 20 wt% of tris(3-(trimethoxysilyl)propyl amine was dissolved in n-hexane as a modifier (molar ratio of n-butyllithium:modifier=1:1), in Example 1.

**Comparative Example 6**

A modified conjugated diene-based polymer was prepared by performing the same method as in Example 1 except for adding 2.5 times the injection amount of TMEDA, changing the temperature of the first reactor to 80°C, transporting a polymer to the second reactor at a point where the conversion ratio in the first reactor reached 85%, and performing modification reaction by continuously supplying a mixture solution of a solution in which 20 wt% of N-(3-(1H-imidazol-1-yl)propyl)-3-(triethoxysilyl)-N-(3-(triethoxysilyl)propyl)propan-1-amine was dissolved in n-hexane as a first modifier and a solution in which 20 wt% of N-(3,6,9,12-tetraoxahexadecyl)-N-(3-(triethoxysilyl)propyl)-3,6,9,12-tetraoxahexadecan-1-amine) was dissolved in n-hexane as a second modifier in an equivalent ratio of 0.3:0.7 to the third reactor, in Example 1.

**Experimental Example 1**

With respect to each of the unmodified or modified conjugated diene-based polymers prepared in the Examples and Comparative Examples, the 1,2-vinyl bond content, a number average molecular weight (Mn, $\times 10^3$ g/mol), a weight average molecular weight (Mw, $\times 10^3$ g/mol), molecular weight distribution (PDI, MWD), mooney viscosity (MV), the Si content, the glass transition temperature (Tg, °C), and cold flow (mg/min) were measured, respectively, and the results are shown in Tables 1 and 2 below.

1) 1,2-vinyl bond content

The vinyl content in each polymer was measured and analyzed using Varian VNMRS 500 MHz NMR.

During measuring NMR, 1,1,2,2-tetrachloroethane was used as a solvent, a solvent peak was calculated as 5.97 ppm, and the 1,2-vinyl bond content (wt%) was calculated by regarding 6.9-6.2 ppm as block styrene peaks, 5.8-5.1 ppm as 1,4-vinyl peaks, and 5.1-4.5 ppm as 1,2-vinyl peaks.

2) Weight average molecular weight (Mw), number average molecular weight (Mn) and molecular weight distribution (MWD; PDI)

By gel permeation chromatography (GPC) (PL GPC220, Agilent Technologies) under the conditions below, a number average molecular weight (Mw), a peak top molecular weight (Mp) and a weight average molecular weight (Mw) were measured and molecular weight distribution was calculated through dividing the weight average molecular weight by the number average molecular weight.

- Column: two columns of PLgel Olexis (Polymer Laboratories Co.) and one column of PLgel mixed-C (Polymer Laboratories Co.) were used in combination.
- Solvent: a mixture of tetrahydrofuran and 2 wt% of an amine compound was used.
- Flow rate: 1 mL/min
- Specimen concentration: 1-2 mg/mL (diluted in THF)
- Injection amount: 100 μL
- Column temperature: 40°C
- Detector: Refractive index
- Standard: Polystyrene (calibration with cubic function)

3) Mooney viscosity (MV)

The mooney viscosity (MV, (ML1+4, @100°C MU)) was measured by using MV-2000 (ALPHA Technologies Co.) using Large Rotor at a rotor speed of 2±0.02 rpm at 100°C. In this case, a specimen used was stood at room temperature (23±3°C) for 30 minutes or more, and 27±3 g of the specimen was collected and put in a die cavity, and then, Platen was operated, and measurement was conducted for 4 minutes.

4) Glass transition temperature (Tg, °C)

A modified conjugated diene-based polymer was considered as a specimen, and based on ISO 22768:2006, a differential scanning calorimeter (product name "DSC3200S" manufactured by MacScience Inc.) was used for the

measurement. Particularly, under the circulation of helium in a rate of 50 ml/min, a DSC curve was recorded while elevating the temperature from -100°C in a rate of 10°C/min, and the peak top (inflection point) of the DSC differential curve was shown as the glass transition temperature.

5) Si content

Measurement was conducted using an inductively coupled plasma optical emission spectroscopy (ICP-OES; Optima 7300DV) as an ICP analysis method. Particularly, measurement was performed by adding about 0.7 g of a specimen to a platinum (Pt) crucible, adding about 1 mL of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:

1) step 1: initial temp 0°C, rate (temp/hr) 180°C/hr, temp (holdtime) 180°C (1hr);
2) step 2: initial temp 180°C, rate (temp/hr) 85°C/hr, temp (holdtime) 370°C (2hr);
3) step 3: initial temp 370°C, rate (temp/hr) 47°C/hr, temp (holdtime) 510°C (3hr),

adding 1 mL of concentrated nitric acid (48 wt%) and 20 μl of concentrated hydrofluoric acid (50 wt%) to a residue, sealing the platinum crucible and shaking for 30 minutes or more, adding 1 mL of boric acid to the specimen, storing at 0°C for 2 hours or more, diluting in 30 mL of ultrapure water, and performing incineration.

6) Cold flow (mg/min)

A modified conjugated diene-based polymer was used as a specimen, and in an oven with a temperature of 50°C, the temperature equilibrium of the specimen and the oven was achieved. After standing for 10 minutes, a polymer specimen pushed out was removed, and a stationary state was made. Then, the polymer specimen was extruded through an orifice with 1.4 inch with a pressure of 34.6 kPa, and an extruded amount of the polymer specimen flown out through the orifice was measured for 90 minutes with an interval of 30 minutes. The extruded amount was computed by gram per minute (mg/min) and shown as cold flow. The smaller the cold flow value is, the better the forming stability (storage stability) is.

[Table 1]

| Division | | Example | | | | |
|---|---|---|---|---|---|---|
| | | 1 | 2 | 3 | 4 | 5 |
| Reaction conditions | Reactor number | 3 | 3 | 3 | 3 | 3 |
| | Polar additive | TMEDA | TMEDA | TMEDA | TMEDA | TMEDA |
| | Modifier or coupling agent | A+C | A+D | A+E | B+C | B+E |
| | First reactor temp (°C) | 65 | 65 | 65 | 65 | 65 |
| | First reactor polymerization conversion ratio (%) | 48 | 48 | 48 | 48 | 47 |
| NMR (wt%) | Vinyl | 10 | 10 | 10 | 10 | 10 |
| GPC | Mw ($\times 10^3$ g/mol) | 505 | 533 | 512 | 576 | 593 |
| | Mn ($\times 10^3$ g/mol) | 330 | 331 | 330 | 341 | 353 |
| | PDI | 1.53 | 1.61 | 1.55 | 1.69 | 1.68 |
| Molecular weight distribution curve | | Unimoda 1 | Unimoda 1 | Unimoda 1 | Unimodal | Unimodal |
| Mooney viscosity (MV) | | 60 | 63 | 62 | 67 | 68 |
| Si content (ppm) | | 230 | 219 | 215 | 270 | 234 |
| Tg (°C) | | -91 | -90 | -90 | -90 | -90 |
| Cold flow (mg/min) | | 0.77 | 0.75 | 0.74 | 0.68 | 0.69 |

[Table 2]

| Division | | Comparative Example | | | | | |
|---|---|---|---|---|---|---|---|
| | | 1 | 2 | 3 | 4 | 5 | 6 |
| Reaction conditions | Reactor number | 3 | CB24 | 3 | 3 | 3 | 3 |
| | Polar additive | TMEDA | | TMEDA | TMEDA | TMEDA | TMEDA |
| | Modifier or coupling agent | H | | C | E | B | A+E |
| | First reactor temp | 55 | | 65 | 65 | 65 | 80 |
| | (°C) | | | | | | |
| | First reactor polymerization conversion ratio (%) | 46 | | 43 | 48 | 47 | 85 |
| NMR (wt%) | Vinyl | 10 | 0.5 | 10 | 10 | 10 | 9 |
| GPC | Mw ($\times 10^3$ g/mol) | 893 | 605 | 561 | 371 | 672 | 696 |
| | Mn ($\times 10^3$ g/mol) | 350 | 248 | 340 | 231 | 320 | 312 |
| | PDI | 2.55 | 2.44 | 1.65 | 1.61 | 2.10 | 2.23 |
| Molecular weight distribution curve | | Unimodal | Unimodal | Unimodal | Unimodal | Unimodal | Unimodal |
| Mooney viscosity (MV) | | 43 | 45 | 65 | 45 | 68 | 72 |
| Si content (ppm) | | 23 | 39 | 249 | 219 | 105 | 185 |
| Tg (°C) | | -90 | -107 | -90 | -90 | -90 | -91 |
| Cold flow (mg/min) | | 0.80 | 0.71 | 1.12 | 1.02 | 0.10 | 0.65 |

A: N-(3-(1H-imidazol-1-yl)propyl)-3-(triethoxysilyl)-N-(3-(triethoxysilyl)propyl)propan-1-amine

B: tris(3-(trimethoxysilyl)propyl) amine

C: N,N-bis(3-(dimethoxy(methyl)silyl)propyl)-methyl-1-amine

D: 3,3'-(1,1,3,3-tetramethoxydisiloxane-1,3-diyl)bis(N,N-diethylpropane-1-amine)

E: N-(3,6,9,12-tetraoxahexadecyl)-N-(3-(triethoxysilyl)propyl)-3,6,9,12-tetraoxahexadecan-1-amine

H: tetrachlorosilane, $SiCl_4$

As in Tables 1 and 2 above, it could be confirmed that Examples 1 to 5 of the present invention all showed the molecular weight distribution (PDI) of less than 1.70 and the cold flow of 1.00 or less. In addition, as shown in FIG. 1, it could be confirmed that Example 1 of the present invention had a unimodal shape molecular weight distribution curve by gel permeation chromatography (GPC). Differently, Comparative Examples 1 and 2, which were unmodified polymers, satisfied the cold flow value or 1.00 or less, but the molecular weight distribution value was 1.70 or more and deviated from the range of the present invention. In addition, Comparative Examples 3 to 6, which were modified with a modifier, but in which one type of the modifier was used, satisfied the molecular weight distribution value of less than 1.70, but the cold flow value was 1.00 or more and deviated from the range of the present invention. In case where the cold flow value was 1.00 or less and satisfied, the molecular weight distribution value was greater than 1.70 and deviated from the range of the present invention.

**Experimental Example 2**

In order to comparatively analyze the physical properties of rubber compositions including the modified or unmodified conjugated diene-based copolymers prepared in the Examples and Comparative Examples, and molded

articles manufactured therefrom, viscoelasticity properties and abrasion resistance were measured, respectively, and the results are shown in Table 4 below.

1) Preparation of rubber specimen

Compounding was performed using each of the modified or unmodified conjugated diene-based polymers of the Examples and Comparative Examples as raw material rubbers under the compounding conditions shown in Table 3 below. The raw materials in Table 3 are represented by parts by weight based on 100 parts by weight of the raw material rubber.

[Table 3]

| Division | Raw material | Amount (parts by weight) |
|---|---|---|
| First stage mulling | Rubber | 100 |
| | Silica | 70 |
| | Coupling agent (X50S) | 11.2 |
| | Process oil | 37.5 |
| | Zinc white | 3 |
| | Stearic acid | 2 |
| | Antioxidant | 2 |
| | Antiaging agent | 2 |
| | Wax | 1 |
| Second stage mulling | Sulfur | 1.5 |
| | Rubber accelerator | 1.75 |
| | Vulcanization accelerator | 2 |

Particularly, the rubber specimen was mulled via a first stage mulling and a second stage mulling. In the first stage mulling, a raw material rubber, silica (filler), an organic silane coupling agent (X50S, Evonik), a process oil (TDAE oil), zinc oxide (ZnO), stearic acid, an antioxidant (TMQ (RD)) (2,2,4-trimethyl-1,2-dihydroquinoline polymer), an antiaging agent (6PPD ((dimethylbutyl)-N-phenyl-phenylenediamine) and wax (Microcrystaline Wax) were mulled using a banbury mixer equipped with a temperature controlling apparatus. In this case, the initial temperature of a mulling apparatus was controlled to 70°C, and after finishing the compounding, a first compounding mixture was obtained at a discharge temperature of 145°C to 155°C. In the second stage mulling, the first compounding mixture was cooled to room temperature, and the first compounding mixture, sulfur, a rubber accelerator (DPD (diphenylguanine)), and a vulcanization accelerator (CZ (N-cyclohexyl-2-benzothiazylsulfenamide)) were added to the mulling apparatus and mixed at a temperature of 100°C or less to obtain a second compounding mixture. Then, via a curing process at 160°C for 20 minutes, a rubber specimen was formed.

2) Viscoelasticity properties

The viscoelasticity properties were checked by measuring viscoelasticity behavior on thermodynamic deformation at each measurement temperature (-60°C-60°C) with a frequency of 10 Hz by using a dynamic mechanical analyzer (GABO Co.) in a film tension mode and securing a tan $\delta$ value. In the measurement values, if the tan $\delta$ value at 60°C decreases, hysteresis loss decreases, and low running resistance (fuel consumption ratio) becomes better. In Table 4 below, the standard value of the viscoelasticity properties (Comparative Example 1) were specified and indexed (%), and thus, the higher numerical value means better results.

3) Abrasion resistance

Abrasion resistance was obtained using a DIN abrasion tester. A load of 10 N was applied to a rotation drum with an abrasion paper attached thereon, and then, a rubber specimen was moved in a vertical direction to the rotation direction of the drum, and a loss weight by abrasion was measured. The rotation speed of the drum was 40 rpm, the

total movement distance of the specimen after finishing the test was 40 m. The smaller loss weight value means better abrasion resistance, but in Table 4, the standard value of the abrasion resistance (Comparative Example 1) was specified and indexed (%), and thus, the higher numerical value means better results.

[Table 4]

| | Example | | | | | Comparative Example | | | | | |
|---|---|---|---|---|---|---|---|---|---|---|---|
| | 1 | 2 | 3 | 4 | 5 | 1 | 2 | 3 | 4 | 5 | 6 |
| Tanδ 60°C (Index) | 118 | 122 | 119 | 120 | 123 | 100 | 86 | 118 | 120 | 112 | 109 |
| Abrasion resistance (Index) | 116 | 113 | 115 | 115 | 114 | 100 | 115 | 112 | 114 | 120 | 117 |

As shown in Table 4, in Examples 1 to 6, it could be confirmed that the viscoelasticity properties and abrasion resistance were improved at the same time, particularly, it could be confirmed that both the viscoelasticity properties and abrasion resistance were markedly improved when compared with Comparative Examples 1 and 2, which used unmodified polymers, and it could be confirmed that the viscoelasticity properties were improved when compared with Comparative Example 5 in which a modifier was applied, but a polymer of a branch type structure formed the main structure. In addition, it could be confirmed that Comparative Examples 3 and 4 which used only one type of a modifier showed the cold flow of greater than 1.00 as shown in Table 1, showed very poor storage stability and forming stability, and showed inferior viscoelasticity properties and abrasion resistance when compared with the Examples. Though the viscoelasticity properties or abrasion resistance are equivalent levels as those of the Examples, when considering storage stability and forming stability, it could be found that the polymer showed inferior performance when compared with the Examples.

In addition, in Comparative Example 6, it was confirmed that the viscoelasticity properties were inferior though two types of modifiers were used, because the conversion ratio of the first polymerization reactor was not controlled.

Through this, it could be confirmed that in order to prepare a polymer having excellent storage stability and forming stability as well as evenly excellent viscoelasticity properties and abrasion resistance, the shape of a molecular weight distribution curve is required to be unimodal, and molecular weight distribution, cold flow and the Si content are required to satisfy specific ranges by applying a specific preparation method including using two types of modifiers, and controlling the conversion ratio of a first polymerization reactor to 50% or less, as in the Examples of the present invention.

## Claims

**1.** A modified conjugated diene-based polymer satisfying the following:

a) a molecular weight distribution curve by gel permeation chromatography (GPC) has a unimodal shape;
b) molecular weight distribution (PDI; MWD) is 1.00 or more to less than 1.70;
c) cold flow is 1.00 or less; and
d) the Si content is 100 ppm or more based on a total weight of the modified conjugated diene-based polymer.

**2.** The modified conjugated diene-based polymer according to claim 1, wherein the modified conjugated diene-based polymer has a glass transition temperature of -100°C to -50°C.

**3.** The modified conjugated diene-based polymer according to claim 1, wherein the modified conjugated diene-based polymer has a number average molecular weight of 200,000 g/mol to 1,000,000 g/mol.

**4.** The modified conjugated diene-based polymer according to claim 1, wherein the modified conjugated diene-based polymer does not comprise a repeating unit derived from an aromatic vinyl-based monomer.

**5.** The modified conjugated diene-based polymer according to claim 1, wherein the 1,2-vinyl bond content in the modified conjugated diene-based polymer is 5 wt% to 30 wt%.

**6.** The modified conjugated diene-based polymer according to claim 1, wherein N atoms are comprised in a modified conjugated diene-based polymer molecule, and the N atom content is 50 ppm or more based on a total weight of the polymer.

**7.** A method for preparing a modified conjugated diene-based polymer, the method comprising:

polymerizing a conjugated diene-based monomer in the presence of a polymerization initiator in a hydrocarbon solvent to prepare an active polymer (S1); and
reacting the active polymer prepared in step (S1) with a modifier (S2),
wherein polymerization reaction (S1) and modification reaction (S2) are continuously performed,
step (S1) is performed in two or more polymerization reactors,
a polymerization conversion ratio in a first polymerization reactor among the polymerization reactors is 50% or less,
the modifier comprises a first modifier and a second modifier,
the first modifier is a modifier having greater than five reactive functional groups which are capable of reacting with the active polymer, and
the second modifier is a modifier having five or less reactive functional groups which are capable of reacting with the active polymer.

**8.** The method for preparing a modified conjugated diene-based polymer according to claim 7, wherein the reactive functional group which is capable or reacting with the active polymer is an alkoxy group.

**9.** The method for preparing a modified conjugated diene-based polymer according to claim 7, wherein the first modifier comprises a compound represented by the following Formula 1, and
the second modifier comprises at least one or more compounds among compounds represented by the following Formula 2 and Formula 3:

[Formula 1]

$$\left(R_{a5}-R_{a4}\right)_{m2}N\left(R_{a1}-Si(OR_{a2})_{m1}(R_{a3})_{3-m1}\right)_{3-m2}$$

in Formula 1,

$R_{a1}$ and $R_{a4}$ are each independently a single bond, or an alkylene group of 1 to 10 carbon atoms,
$R_{a2}$ and $R_{a3}$ are each independently an alkyl group of 1 to 10 carbon atoms,
$R_{a5}$ is a hydrogen atom, an alkyl group of 1 to 10 carbon atoms, a divalent, trivalent or tetravalent alkylsilyl group substituted with an alkyl group of 1 to 10 carbon atoms, or a five-member heterocyclic group of 2 to 4 carbon atoms, comprising one or more heteroatoms selected from the group consisting of N, O and S, wherein the heterocyclic group may be substituted or unsubstituted with an alkyl group of 1 to 10 carbon atoms or a (trialkoxysilyl)alkyl group, and in the (trialkoxysilyl) alkyl group, the alkyl group is an alkyl group of 1 to 10 carbon atoms, and the alkoxy group is an alkoxy group of 1 to 10 carbon atoms,
$m_1$ is an integer of 1 to 3, and $m_2$ is an integer of 0 to 2, where -($OR_{a2}$) groups are greater than five,

[Formula 2]

$$\left(R_{b5}-R_{b4}\right)_{n2}N\left(R_{b1}-Si(OR_{b2})_{n1}(R_{b3})_{3-n1}\right)_{3-n2}$$

in Formula 2,

$R_{b1}$ is a single bond, or an alkylene group of 1 to 10 carbon atoms,
$R_{b2}$ and $R_{b3}$ are each independently an alkyl group of 1 to 10 carbon atoms or .-$[R_{b6}O]_{n3}$-$R_{b7}$,
$R_{b4}$ is a single bond, an alkylene group of 1 to 10 carbon atoms, or -$[R_{b6}O]_{n3}$,
$R_{b5}$ is a hydrogen atom, an alkyl group of 1 to 10 carbon atoms, or a divalent, trivalent or tetravalent alkylsilyl group substituted with an alkyl group of 1 to 10 carbon atoms,
$R_{b6}$ is an alkylene group of 1 to 10 carbon atoms,
$R_{b7}$ is an alkyl group of 1 to 10 carbon atoms,
$n_1$ may be an integer of 1 to 3, $n_2$ is an integer of 0 to 2, and $n_3$ is an integer of 1 to 30, where total -($OR_{b2}$) groups are five or less,

[Formula 3]

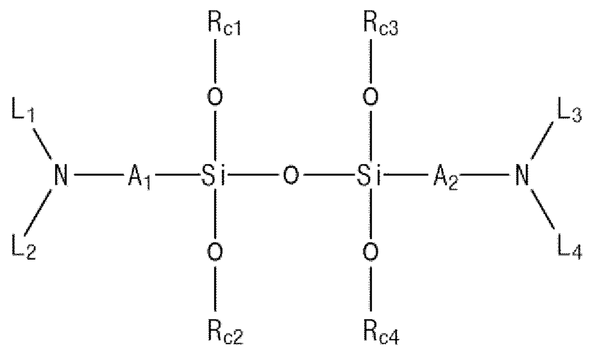

in Formula 3,

$A_1$ and $A_2$ are each independently an alkylene group of 1 to 20 carbon atoms,
$R_{c1}$ to $R_{c4}$ are each independently an alkyl group of 1 to 20 carbon atoms, and
$L_1$ to $L_4$ are each independently an alkyl group of 1 to 20 carbon atoms, an aryl group of 6 to 20 carbon atoms, or a divalent, trivalent or tetravalent alkylsilyl group substituted with an alkyl group of 1 to 10 carbon atoms.

**10.** The method for preparing a modified conjugated diene-based polymer according to claim 7, wherein the first modifier and the second modifier are comprised in an equivalent ratio of 1:9 to 5:5.

**11.** A rubber composition comprising the modified conjugated diene-based polymer according to claim 1, and a filler.

**12.** The rubber composition according to claim 11, comprising 0.1 parts by weight to 200 parts by weight of the filler with respect to 100 parts by weight of the modified conjugated diene-based polymer.

**13.** The rubber composition according to claim 12, wherein the filler is a silica-based filler or a carbon black-based filler.

FIG. 1

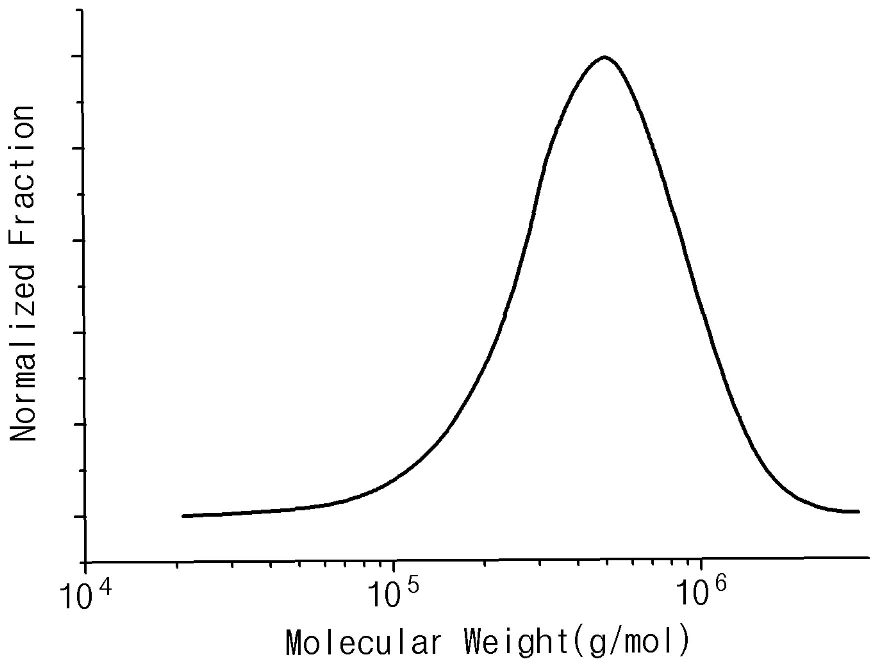

**INTERNATIONAL SEARCH REPORT**

International application No.
**PCT/KR2021/000643**

**A. CLASSIFICATION OF SUBJECT MATTER**

**C08F 36/04**(2006.01)i; **C08F 8/40**(2006.01)i; **C08F 8/32**(2006.01)i; **C08L 9/00**(2006.01)i; **C08L 19/00**(2006.01)i; **C08K 3/04**(2006.01)i; **C08K 3/36**(2006.01)i

According to International Patent Classification (IPC) or to both national classification and IPC

**B. FIELDS SEARCHED**

Minimum documentation searched (classification system followed by classification symbols)

C08F 36/04(2006.01); B60C 1/00(2006.01); C08C 19/25(2006.01); C08F 36/06(2006.01); C08F 8/00(2006.01); C08F 8/30(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 변성 공액디엔계 중합체(modified conjugated diene polymer), 유니모달(unimodal), 분자량 분포(PDI; MWD), 콜드 플로우(cold flow), 변성제(modifying agent)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0088340 A (LG CHEM, LTD.) 03 August 2018 (2018-08-03)<br>See paragraphs [0038], [0048]-[0059], [0099] and [0269]; claims 1 and 6; example 1; and tables 1 and 3. | 1-13 |
| Y | KR 10-2009-0091807 A (JSR CORPORATION) 28 August 2009 (2009-08-28)<br>See paragraphs [0175]-[0177]; example 1; and table 2. | 1-13 |
| A | JP 2013-082842 A (ASAHI KASEI CHEMICALS CORP.) 09 May 2013 (2013-05-09)<br>See paragraph [0035]; and claims 1-9. | 1-13 |
| A | KR 10-2019-0020061 A (JAPAN ELASTOMER CO., LTD.) 27 February 2019 (2019-02-27)<br>See claims 1 and 10-12; and table 1. | 1-13 |
| A | KR 10-1271929 B1 (BRIDGESTONE CORPORATION) 05 June 2013 (2013-06-05)<br>See paragraphs [0387]-[0389] and [0518]; and claims 1, 24-26 and 28-32. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2021** | **26 April 2021** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No.
**PCT/KR2021/000643**

**C. DOCUMENTS CONSIDERED TO BE RELEVANT**

| Category* | Citation of document, with indication, where appropriate, of the relevant passages | Relevant to claim No. |
|---|---|---|
| A | KR 10-2035177 B1 (LG CHEM, LTD.) 08 November 2019 (2019-11-08)<br>See entire document. | 1-13 |

Form PCT/ISA/210 (second sheet) (July 2019)

**INTERNATIONAL SEARCH REPORT**
**Information on patent family members**

International application No.
**PCT/KR2021/000643**

| Patent document cited in search report | Publication date (day/month/year) | Patent family member(s) | Publication date (day/month/year) |
|---|---|---|---|
| KR 10-2018-0088340 A | 03 August 2018 | CN 110382566 A | 25 October 2019 |
| | | EP 3553095 A1 | 16 October 2019 |
| | | EP 3553095 B1 | 17 February 2021 |
| | | JP 2020-504211 A | 06 February 2020 |
| | | KR 10-2018-0084603 A | 25 July 2018 |
| | | KR 10-2048919 B1 | 26 November 2019 |
| | | US 2020-0002454 A1 | 02 January 2020 |
| | | WO 2018-128291 A1 | 12 July 2018 |
| KR 10-2009-0091807 A | 28 August 2009 | BR PI0720711 A2 | 18 February 2014 |
| | | BR PI0720711 B1 | 25 June 2019 |
| | | CN 101600736 A | 09 December 2009 |
| | | CN 101600736 B | 07 November 2012 |
| | | EP 2098541 A1 | 09 September 2009 |
| | | EP 2098541 B1 | 05 June 2013 |
| | | JP 5604786 B2 | 15 October 2014 |
| | | RU 2009128667 A | 10 February 2011 |
| | | RU 2464280 C2 | 20 October 2012 |
| | | US 2010-0317794 A1 | 16 December 2010 |
| | | WO 2008-078814 A1 | 03 July 2008 |
| | | ZA 200904419 B | 25 August 2010 |
| JP 2013-082842 A | 09 May 2013 | JP 5964570 B2 | 03 August 2016 |
| KR 10-2019-0020061 A | 27 February 2019 | BR 112019005573 A2 | 04 June 2019 |
| | | CN 109476778 A | 15 March 2019 |
| | | EP 3517552 A1 | 31 July 2019 |
| | | EP 3517552 B1 | 11 November 2020 |
| | | SG 11201901877 A | 29 April 2019 |
| | | TW 201815834 A | 01 May 2018 |
| | | TW I651336 B | 21 February 2019 |
| | | US 10822446 B2 | 03 November 2020 |
| | | US 2020-0024383 A1 | 23 January 2020 |
| | | WO 2018-056025 A1 | 29 March 2018 |
| KR 10-1271929 B1 | 05 June 2013 | BR PI0609075 A2 | 17 February 2010 |
| | | BR PI0609075 B1 | 09 October 2018 |
| | | CN 100554285 C | 28 October 2009 |
| | | CN 101160328 A | 09 April 2008 |
| | | EP 1873168 A1 | 02 January 2008 |
| | | EP 1873168 B1 | 12 December 2012 |
| | | ES 2399435 T3 | 01 April 2013 |
| | | JP 2013-237868 A | 28 November 2013 |
| | | JP 5554470 B2 | 23 July 2014 |
| | | JP 5768099 B2 | 26 August 2015 |
| | | RU 2007138302 A | 20 April 2009 |
| | | RU 2425845 C2 | 10 August 2011 |
| | | US 2009-0292043 A1 | 26 November 2009 |
| | | US 7968652 B2 | 28 June 2011 |
| | | WO 2006-112450 A1 | 26 October 2006 |
| KR 10-2035177 B1 | 08 November 2019 | BR 112020012802 A2 | 24 November 2020 |
| | | CN 111433234 A | 17 July 2020 |
| | | EP 3705502 A1 | 09 September 2020 |

Form PCT/ISA/210 (patent family annex) (July 2019)

**INTERNATIONAL SEARCH REPORT**
**Information on patent family members**

International application No.
**PCT/KR2021/000643**

| Patent document cited in search report | Publication date (day/month/year) | Patent family member(s) | Publication date (day/month/year) |
|---|---|---|---|
| | | JP 2021-505717 A | 18 February 2021 |
| | | KR 10-2035177 B1 | 08 November 2019 |
| | | TW 202005997 A | 01 February 2020 |
| | | US 2021-0009722 A1 | 14 January 2021 |
| | | WO 2020-013638 A1 | 16 January 2020 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200007494